Europäisches Patentamt

**European Patent Office**

Office européen des brevets

(11) Publication number: **0 266 822 B1**

# EUROPEAN PATENT SPECIFICATION

(45) Date of publication of patent specification: **02.05.91**   (51) Int. Cl.⁵: **A01N 49/00**

(21) Application number: **87201982.3**

(22) Date of filing: **15.10.87**

The file contains technical information submitted
after the application was filed and not included in
this specification

(54) Use of farnesene in agriculture or horticulture or in the protection of stocks, or for the preparation of products, and also method for controlling insects and acarids by using farnesene.

(30) Priority: **16.10.86 NL 8602604**

(43) Date of publication of application:
**11.05.88 Bulletin 88/19**

(45) Publication of the grant of the patent:
**02.05.91 Bulletin 91/18**

(84) Designated Contracting States:
**AT BE CH DE ES FR GB GR IT LI LU NL SE**

(56) References cited:
**EP-A- 0 073 080**
**EP-A- 0 188 845**
**WO-A-82/04249**

(73) Proprietor: **NEDERLANDSE ORGANISATIE VOOR TOEGEPAST-NATUURWETENSCHAPPELIJK ONDERZOEK TNO**
**Juliana van Stolberglaan 148**
**NL-2595 CL The Hague(NL)**

(72) Inventor: **Gut, Jiri**
**Jan Campertlaan 27**
**2626 NZ Delft(NL)**
Inventor: **Van Oosten, Adriaan, Maarten**
**Wielewaalstraat 26**
**3145 NE Maassluis(NL)**

(74) Representative: **van der Beek, George Frans, Ir. et al**
**Nederlandsch Octrooibureau Schevening-seweg 82 P.O. Box 29720**
**NL-2502 LS 's-Gravenhage(NL)**

Rank Xerox (UK) Business Services

## Description

The invention relates to the use of farnesene in agriculture or horticulture or in the protection of stocks.

In this patent application, farnesene is understood to mean both β-farnesene and α-farnesene. Farnesene, i.e. 7,11-dimethyl-3-methylene-1,6,10-dodecatriene, can be present in the form of two isomers, viz. E- and Z-β-farnesene. α-farnesene, i.e. 3,7,11-trimethyl-1,3,6,10-dodecatetraene, can be present in the form of four isomers, viz. Z,Z-, Z,E-, E,E-and E,Z-α-farnesene. E-β-farnesene is known as an alarm pheromone for aphids (Science 177, 1121 (1972); Nature 241, 126 (1973) and Experientia 29, 658-660 (1973)). It is furthermore known that, when E-β-farnesene in liquid form is brought into contact with aphids, it has a lethal action on said insects. (Dutch Patent Application 8103905, corresponding to US Patent 4,505,934).

From research by the Applicant it has been found that the concentration of E-β-farnesene vapour which causes alarm action (pheromone effect) in the case of aphids is between 1 and 10 ng per ml of air. Surprisingly, it has now been found that, at a concentration which is higher than the alarm pheromone concentration for aphids, farnesene has a hormonal effect on insects and acarids. This means that the development, reproduction and/or morphology of insects is influenced. This influence is, inter alia, dependent on the farnesene isomer used, the concentration thereof and the type of the creature to be controlled. Although farnesene, in particular E-β-farnesene, is toxic to aphids, it is innocuous for plants, higher animals and man.

The invention therefore relates to the use of farnesene in agriculture or horticulture or in the protection of stocks to influence hormonal processes, in particular to influence the development, reproduction and/or morphology acarids and insects other than aphids. Agriculture must also be understood to mean (intensive) livestock breeding.

The invention also relates to the use of gaseous or vaporous farnesene in agriculture or horticulture or in the protection of stocks to control acarids and insects other than aphids, the farnesene being used in a concentration which is at least 10 ng per ml of air, measured at a pressure of 1 atmosphere and at a temperature of 20°C. As has been stated above, the concentration of the vapour which produces the alarm action is 1-10 ng per ml of air under these circumstances. Under the same circumstances, the concentration of saturated E-β-farnesene vapour is approximately 0.8 μg per ml of air. The invention therefore relates to the use of farnesene vapour in the range from 10 ng to 0.8 μg per ml of air (20°C, 1 atmosphere).

In the abovementioned uses, E-β-farnesene is preferably mainly used as farnesene according to the invention. It is also possible to use mixtures with other farnesene isomers. In practice, for example, industrial farnesene mixtures may be used with a content of at least 20-30 % by weight of E-β-farnesene. In these mixtures the E-β-farnesene is usually present as main component. Of course, in choosing the quantity of such mixtures to be used, account is taken of the quantity of active substance present in the mixture.

Methods for controlling insects and acarids by means of a gaseous or vaporous active substance are in any case generally known. In cultivation under glass, for example, methyl bromide is frequently used. Although methyl bromide as such is toxic for man and mammals, the use in closed spaces, for example glasshouses, is acceptable because it is sparingly soluble in water and is not absorbed by the cultivated plants. (for example, vegetables) (cf. Römpps Chemie Lexicon, 7th edition (1974), page 2147). Another example of such an insect control by means of a gaseous active substance is encountered in Ullmanns Encyklopädie der technischen Chemie, part 7, page 99. There acrylonitrile is mentioned as active substance. Because this substance has only a faint smell, a warning odoriferous substance is added.

From the point of view of human and animal health, the use of toxic substances for controlling harmful organisms is, however, undesirable. There is therefore a permanent requirement for control agents or methods for insects and acarids which are safe in an ecological respect.

The invention therefore also relates to a method for controlling acarids and insects other than aphids in which an active substance in the gaseous or vaporous form is allowed to act on the creatures to be controlled, farnesene being used as active substance in a concentration which is at least 10 ng per ml of air (20°C, 1 atmosphere).

Farnesene can be used as saturated vapour. For this purpose, the farnesene can be introduced in the solid or liquid state into the environment of the creatures to be controlled and allowed to change into the gaseous or vaporous form under the prevailing conditions. It is possible to use farnesene as aerosol product and/or slow-release product and also in closed spaces such as glasshouses and also in the field. In this case it has to be ensured that the acarids and insects other than aphids (which are in development) and/or the plants to be protected come into direct contact with farnesene. As a result of the direct contact with liquid farnesene, a lethal action occurs in the case of aphids, as is described in Dutch Patent Application 8103905. In the case of the acarids and insects other than aphids which have not been killed, a vapour action occurs. For the intended effect, the duration of this action may be short. It is also possible, for example, to introduce slow-release products into the immediate environment in which the acarids and insects other than aphids are developing, as a result of which they are exposed to a prolonged vapour action.

Slow-release formulations of farnesene may consist of a carrier (for example, a powder) to which farnasene is applied. Derivatives of E-$\beta$-farnesene may also be used as slow-release formulations, such as, for example, the Diels-Alder complexes which are mentioned in the European Patent 0,079,906. In this patent methods are described which are based on alarm action or a repellent effect. Said action or said effect is achieved by using the derivatives themselves or by means of E-$\beta$-farnesene released from the derivatives (under the influence of light or elevated temperature).

In the use or method according to the invention the systems known from the European Patent 0,079,906 should be used with much higher active substance concentrations (for example, E-$\beta$-farnesene) and often for longer periods than are described in said patent. The reason is that it is necessary to produce a hormonal effect in insects and acarids by allowing sufficient active substance to be released per unit time.

It is also possible to use a plastic material such as polyurethane in a slow-release product, the farnasene being included. Farnesene can also be mixed with mineral oil or another suitable oil or liquid .

A prolonged exposure is not necessary, but the farnesene is preferably allowed to act on the creatures to be controlled or development stages thereof for at least 1 hour. In the case, inter alia, of aphid morphs ants, a short exposure has an effect on the nature of the morphs in the subsequent generations.

It has been found that, of the abovementioned farnesenes, the E-$\beta$-farnesene has the strongest hormonal action.

In relation to the hormonal action of the farnesene isomers to be used according to the invention the following can furthermore be stated.

It is known that certain farnesyl derivatives, i.e. compounds derived from farnesol, are able to disturb the development of arthropods (US Patent 3,665,040). The farnesyl derivatives may be regarded as isoprenoid precursors of the insect hormone juvenile hormone III. The action of said substances has long been known [Schmialek, Z. Naturforschg. 18b , 516-519 (1963)] and is probably based on conversion into additional juvenile hormone after absorption by the insect.

The $\beta$- and $\alpha$-farnesene isomers which are used according to the invention are, however, not precursors of juvenile hormone so that their action must be fundamentally different. The precise action mechanism is, however, as yet unknown. The striking fact in this connection is that the farnesene isomers lack the functional groups of the known farnesyl derivatives.

The farnesenes are non-polar and behave as fat-like substances. They are capable of being absorbed via the wax layer and the cuticula of the insects and thus get into the haemolymph. It is also possible that they are absorbed directly into the haemolymph via the stigmata.

The farnesenes are completely innocuous for higher animals.

According to a preferred embodiment of the invention, farnesene can be used in glasshouses for controlling acarids and insects other than aphids. In this case, farnesene vapour is introduced into the glasshouses by means of a so-called time-release system. In this case, for example, ten aerosol cans each containing 10-100 mg of farnesene are set up in a glasshouse with a volume of 10,000 $m^3$. Automatic dosing at intervals of 10 minutes is carried out. This is continued for 2-3 weeks, after which the glasshouse is ventilated and ichneumon wasps are brought in. It is also possible to use the biological control at the same time as adult predators are used which do not have to propagate themselves. Farnesene vapour only has an effect, after all, on insects and acarids in development and on the reproduction.

It is also possible to use farnesene with normal insecticides and/or acaricides. It is then possible to use lower concentrations of insecticides. In this case use can then be made in an advantageous manner of the (known) alarm action, the (known) toxic effects and the hormonal action (according to the invention) of E-$\beta$-farnesene, separately or in combination with each other. In addition, it is beneficial that the treatment with insecticides and/or acaricides has to be repeated less often.

The use of farnesene vapour in the field is, of course, more difficult than in a sealed space such as a glasshouse. It is in fact possible to use farnesene as a slow-release product, the action of the vapour in fact being of short duration, but regulation of the development stages of the acarids and insects other than aphids morphs, nevertheless being possible.

According to the invention, farnesene vapour can also be used in intensive livestock breeding, for example, in the control of insect infestations which arise through keeping manure. This may occur in stalls and in storage spaces. In this case, the farnesene is preferably used as an aerosol or as a slow-release formulation. For example, in controlling the housefly (Musca domestica), a slow-release formulation may be used in increased concentration in the manure in order to retard the development of the fly larvae. In addition, the flies which have nevertheless developed can more readily be trapped with suitable trapping systems (electrocuting traps, glue plates and the like, possibly in combination with pheromones). In addition, the reproduction of the adult creatures can be retarded under the influence of farnesene vapour. Furthermore, the method can also be combined with parasites and fly predators. In this case, for example, farnesene and biological control can be used alternately. A considerable advantage in this connection is that a method is available in which it is virtually no longer necessary to use insecticides. This means that there are no longer any harmful residues in the manure, in the products delivered or on the cattle.

According to the invention, farnesene vapour can also be used for controlling stock and household acarids and insects other than aphids. In this case it is possible to use farnesene vapour for a prolonged period because the insects and acarids are encountered in confined spaces. The insects which have been delayed or disturbed in their development are more susceptible to supplementary means, for example, normal insecticides and acaricides, parasites which kill insects and acarids, bacteria, viruses, moulds or eelworms. It is also possible to use trapping systems (glue traps, electrocuting traps). In this case, it is easier than before to get the populations which have been retarded by farnesene under control by trapping. Insecticides or acaricides are in this case no longer necessary.

According to the invention it is also possible to treat, for example, products intended for export such as cut flowers, plants, vegetables and the like with farnesene vapour. This can be carried out in relatively small spaces which do not have to be entered during the treatment and in which high concentrations of vapour, for example the saturation concentration of farnesene, can be used. Apart from this, such a use could also take place in glasshouses ("fogging¨ method).

Examples of insects and acarids which are suitable for the use of farnesene according to the invention are: white fly (Trialurodes vaporariorum), and in general, the Homoptera, red spider (Tetranychus urticae), thrips (Thysanoptera); the above-mentioned insects and acarids are primarily encountered in glasshouses.

Examples of insects in intensive livestock breeding are, inter alia: the housefly (Musca domestica), fruit flies (Limosina sp.), lesser meal worm (Alphitobius diaperinus), in general Diptera and Coleoptera.

Insects which occur primarily in stocks are Lepidoptera and Coleoptera, for example the cacao moth (Ephestia elutella), the tobacco beetle (Lasioderma serricorne), the confused flour beetle (Tribolium confusum) and the Khapra beetle (Trogoderma granarium).

Domestic insects are, for example, cockroaches (Dictyoptera), bugs (Heteroptera) and ants (Hymenoptera), for example the German cockroach ( Blattella germanica), the bedbug (Cimex lectularius) and the pharao ant (Monomorium pharaonis).

Insects which are encountered in the field are, for example, locusts (Orthoptera) and colorado beetles (Coleoptera).

In the following examples the invention is explained in more detail.

Example I

Mature egg capsules of Blattella germanica (German cockroach) were placed in a small glass dish containing moist cotton wadding in 2 plastic boxes with dimensions of 9 x 14 x 21 cm, with 3 egg capsules in each box. The boxes were provided with a lid having a ventilation opening of 3 cm sealed off with gauze. Filter paper was placed on the bottom. A small dish containing water and a small dish containing food were placed on top thereof. The temperature was 25-27° C.

After the egg capsules had hatched, 40 nymphs were selected in each box. Farnesene vapour was administered by measuring out E-$\beta$-farnesene (80-90 % pure) on 3 small pieces of filter paper with a diameter of 2.5 cm which were attached to the bottom of the lid. A quantity of 10 mg of E-$\beta$-farnesene was used per small piece of filter paper (in total 30 mg).

The development of the cockroaches was followed. The small pieces of filter paper were replaced every 2 days and provided with new E-$\beta$-farnesene. Every week counts were carried out.

In the course of 4 weeks, the cockroaches which had been treated with farnesene vapour were 2 stages behind in development. After 5 weeks the blank cockroaches were in the 4th stage (3 skin sheddings). The cockroaches in the farnesene vapour were at that time still in the 2nd stage (1 skin shedding).

A disturbance also occurred in the skin shedding mechanism, as a result of which mortality occurred among the cockroaches in the farnesene test. After 2 weeks, the total number of creatures which had died was 55 %, after 3 weeks 70 % and after 4 weeks 80 %. In the blank test the mortality was 0% throughout the whole duration of the test.

When the test was repeated, but this time with a concentration of farnesene which was a factor of ten lower (1 ng - 100 ng/ml of air), a much less clear effect was observed after two weeks. In the test with treated cockroaches there is in this case still 38 % in the second stage and the mortality is approximately 15-20 %. In the blank test 14 % are in the second stage (the rest in the third stage) and there is 0 % mortality.

Example II

Fly larvae (bluebottle fly, Calliphora sp.) in the last stage were bred to produce adult flies under the influence of farnesene vapour in 2 small plastic boxes having ventilation openings (50 larvae in each small box). Capacity of the small box approximately 50 ml. 2 other small boxes (without farnesene) were also provided with 50 larvae each. The quantity of E-$\beta$-farnesene (80-90 % pure) was 5 mg per small piece of filter paper (diameter 2.5 cm) per small box (temperature 25-27° C).

The small pieces of filter paper were replaced every day and provided with new E-$\beta$-farnesene. After 1 day at 27° C, 40-50 % relative humidity, and 18 hours of light/6 hours of darkness, the larvae began to pupate.

In the farnesene test, the progress of the pupation was delayed, the number of pupated fly larvae being 50-75 % of the number in the blank test in the course of time. The emergence of the flies was also delayed and was approximately 20 % of the number of flies which had emerged in the blank test in the course of time.

**Claims**

1. Use of farnesene in agriculture or horticulture or in the protection of stocks to influence hormonal processes in acarids and insects other than aphids.

2. Use of farnesene in agriculture or horticulture or in the protection of stocks to influence the development, reproduction and/or morphology of acarids and insects other than aphids.

3. Use of gaseous or vaporous farnesene in agriculture or horticulture or in the protection of stocks to control acarids and insects other than aphids in a concentration higher than 10 ng per ml of air (20° c).

4. Use according to one of the preceding claims, characterized in that E-$\beta$-farnesene is mainly used as farnesene, preferably in the form of industrial mixtures of farnesene isomers.

5. Method for controlling acarids and insects other than aphids in which an active substance in the gaseous or vaporous form is allowed to act on the creatures to be controlled, characterized in that farnesene is used as active substance in a concentration which is higher than 10 ng per ml of air (20° C).

6. Method according to claim 5, characterized in that saturated farnesene vapour is used.

7. Method according to claim 5 or 6, characterized in that the farnesene is allowed to act on the creatures to be controlled for at least 1 hour.

8. Method according to one of the claims 5-7, characterized in that farnesene is introduced in the solid or liquid state into the environment of the creatures to be controlled and that farnesene is allowed to change into the gaseous or vaporous form under the prevailing conditions.

9. Method according to one of the claims 5-8, characterized in that farnesene is used as an aerosol formulation or slow-release formulation.

10. Method according to one of the claims 5-9. characterized in that E-$\beta$-farnesene is mainly used as farnesene preferably in the form of industrial mixtures of farnesene isomers.

11. Method according to one of the claims 5-10, characterized in that during or after using farnesene, a normal agent for controlling insects and/or acarids is used.

12. Method according to one of the claims 5-11, characterized in that after using farnesene, insects and/or parasites which kill acarids, bacteria, viruses, moulds and/or eelworms are introduced into the living space of the creatures to be controlled.

**Revendications**

1. Utilisation du farnésène dans l'agriculture ou l'horticulture ou dans la protection du bétail pour influencer des processus hormonaux chez les acariens et les insectes autres que les aphidiens.

2. Utilisation du farnésène dans l'agriculture ou l'horticulture ou dans la protection du bétail pour influencer le développement, la reproduction et/ou la morphologie des acariens et des insectes autres que les aphidiens.

3. Utilisation de farnésène gazeux ou vaporeux en agriculture ou en horticulture ou dans la protection du bétail pour lutter contre les acariens et les insectes autres que les aphidiens à une concentration supérieure à 10 ng/ml d'air (20° C).

4. Utilisation selon l'une des revendications précédentes, caractérisée en ce que le E-β-farnésène est surtout utilisé sous forme de farnésène, de préférence sous forme de mélanges industriels d'isomères de farnésène.

5. Procédé pour lutter contre les acariens et les insectes autres que les aphidiens, dans lequel on fait agir une substance active sous forme gazeuse ou vaporeuse sur les créatures contre lesquelles il s'agit de lutter, caractérisé en ce que le farnésène est utilisé comme substance active à une concentration qui est supérieure à 10 ng/ml d'air (20° C)

6. Procédé selon la revendication 5, caractérisé en ce qu'on utilise de la vapeur de farnésène saturée.

7. Procédé selon la revendication 5 ou 6, caractérisé en ce qu'on fait agir le farnésène sur les créatures contre lesquelles il s'agit de lutter pendant au moins une heure.

8. Procédé selon l'une des revendications 5-7, caractérisé en ce que le farnésène est introduit à l'état solide ou liquide dans l'environnement des créatures contre lesquelles il s'agit de lutter et en ce qu'on laisse le farnésène passer sous forme gazeuse ou vaporeuse dans les conditions dominantes.

9. Procédé selon l'une des revendications 5-8, caractérisé en ce que le farnésène est utilisé sous forme de formulation d'aérosol ou de formulation à libération lente.

10. Procédé selon l'une quelconque des revendications 5-9, caractérisé en ce que le E-β-farnésène est surtout utilisé sous forme de farnésène, de préférence sous forme de mélanges industriels d'isomères de farnésène.

11. Procédé selon l'une quelconque des revendications 5-10, caractérisé en ce que pendant ou après l'utilisation du farnésène, on utilise un agent normal pour lutter contre les insectes et/ou les acariens.

12. Procédé selon l'une des revendications 5-11, caractérisé en ce qu'après utilisation du farnésène, on introduit des bactéries, des virus, des moisissures et/ou des nématodes dans l'espace de vie des créatures contre lesquelles il s'agit de lutter.

**Ansprüche**

1. Verwendung von Farnesen in Landwirtschaft oder Gartenbau oder im Vorratsschutz, um hormonelle Prozesse bei Milben und Insekten außer Läusen zu beeinflussen.

2. Verwendung von Farnesen in Landwirtschaft oder Gartenbau oder im Vorratsschutz, um die Entwicklung, Reproduktion und/oder Morphologie von Milben und Insekten außer Läusen zu beeinflussen.

3. Verwendung von gasförmigem oder dampfförmigem Farnesen in Landwirtschaft oder Gartenbau oder im Vorratsschutz zur Bekämpfung von Milben und Insekten außer Läusen in einer höheren Konzentration als 10 ng pro ml Luft (20° C).

4. Verwendung nach einem der vorhergehenden Ansprüche, dadurch gekennzeichnet, daß hauptsächlich (E)-β-Farnesen als Farnesen verwendet wird, vorzugsweise in der Form industrieller Gemische der Farnesenisomeren.

5. Verfahren zur Bekämpfung von Milben und Insekten außer Läusen, wobei eine aktive Substanz in gas- oder dampfförmiger Form auf die zu bekämpfenden Lebewesen einwirken kann, dadurch gekennzeichnet, daß Farnesen als aktive Substanz in einer Konzentration, die größer als 10 ng pro ml Luft (20° C) ist, verwendet wird.

6. Verfahren nach Anspruch 5, dadurch gekennzeichnet, daß gesättigter Farnesendampf verwendet wird.

7. Verfahren nach Anspruch 5 oder 6, dadurch gekennzeichnet, daß das Farnesen mindestens 1 Stunde lang auf die zu bekämpfenden Lebewesen einwirken kann.

8. Verfahren nach einem der Ansprüche 5 bis 7, dadurch gekennzeichnet, daß Farnesen im festen oder flüssigen Zustand in die Umgebung der zu bekämpfenden Lebewesen eingeführt wird, und daß Farnesen sich unter den vorherrschenden Bedingungen in die gas- oder dampfförmige Form umwandeln kann.

9. Verfahren nach einem der Ansprüche 5 bis 8, dadurch gekennzeichnet, daß Farnesen als eine Aerosolformulierung oder den Wirkstoff langsam freisetzende Formulierung verwendet wird.

10. Verfahren nach einem der Ansprüche 5 bis 9, dadurch gekennzeichnet, daß hauptsächlich (E)-$\beta$-Farnesen als Farnesen verwendet wird, vorzugsweise in der Form industrieller Gemische der Farnesenisomeren.

11. Verfahren nach einem der Ansprüche 5 bis 10, dadurch gekennzeichnet, daß während oder nach der Anwendung von Farnesen ein normales Mittel zur Bekämpfung von Insekten und/oder von Milben verwendet wird.

12. Verfahren nach einem der Ansprüche 5 bis 11, dadurch gekennzeichnet, daß nach der Anwendung von Farnesen Parasiten, Bakterien, Viren, Schimmelpilze und/oder Älchen in den Lebensraum der zu bekämpfenden Lebewesen eingeführt werden.